(19) Europäisches Patentamt
European Patent Office
Office européen des brevets

(11) Veröffentlichungsnummer: **0 191 726**
A2

(12) # EUROPÄISCHE PATENTANMELDUNG

(21) Anmeldenummer: **86810008.2**

(22) Anmeldetag: **13.01.86**

(51) Int. Cl.⁴: **C 08 L 79/06,** C 08 L 79/08, H 01 B 1/12, H 01 M 4/60, H 05 K 9/00

(30) Priorität: **17.01.85 CH 205/85**

(43) Veröffentlichungstag der Anmeldung: **20.08.86 Patentblatt 86/34**

(84) Benannte Vertragsstaaten: **BE CH DE FR GB LI NL**

(71) Anmelder: **CIBA-GEIGY AG, Klybeckstrasse 141, CH-4002 Basel (CH)**

(72) Erfinder: **Tieke, Bernd, Dr., 36, route du Bugnon, CH-1752 Villars-sur-Glâne (CH)**
Erfinder: **Zahir, Sheik Abdul-Cader, Dr., Elsternstrasse 12, CH-4104 Oberwil (CH)**

(54) **Polypyrrol-Polyimidzusammensetzungen.**

(57) Es werden Zusammensetzungen aus einem löslichen Polyimid und Polypyrrol beschrieben. Diese lassen sich vorzugsweise durch anodische Oxidation von Pyrrol oder Pyrrolderivaten an polyimidbeschichteten Elektroden herstellen.

Die Zusammensetzungen ermöglichen die Herstellung von freitragenden, elektrisch leitfähigen Filmen.

EP 0 191 726 A2

CIBA-GEIGY AG
Basel (Schweiz)

3-15227/-

# Polypyrrol-Polyimidzusammensetzungen

Die vorliegende Erfindung betrifft Polypyrrol-Polyimidzusammensetzungen, bevorzugt Polyimidfilme, die durch ein polymerisiertes oder copolymerisiertes Pyrrolderivat modifiziert sind, ein Verfahren zur Herstellung dieser Filme, sowie deren Verwendung als elektrisch leitende Filme oder als Verbundwerkstoffe.

Schichten aus Polypyrrol oder aus Copolymerisaten von Pyrrol sind bekannt. Diese Filme besitzen eine hohe elektrische Leitfähigkeit und sind gegenüber Umgebungseinflüssen (Luft, Feuchtigkeit) resistent.

Ihre mechanischen Eigenschaften lassen allerdings zu wünschen übrig. Polypyrrolfilme mit anorganischen Anionen sind spröde und zerreissen leicht unter Belastung. Dies begrenzt ihre praktische Anwendbarkeit, da sie sich beispielsweise nur schlecht verformen lassen.

Es hat daher nicht an Versuchen gefehlt, Polypyrrolfilme in eine für die Anwendung vorteilhaftere Form zu bringen.

In der DE-OS 3,227,914 wird ein Verfahren zum Verarbeiten von Polypyrrol beschrieben, bei dem das Polymere bei definierten hohen Temperaturen unter Druck und gegebenenfalls mit weiteren Stoffen verformt wird.

Auch über die Herstellung elektrisch leitfähiger Filme aus Polypyrrol und anderen herkömmlichen isolierenden Polymeren, wie beispielsweise PVC, wurde bereits berichtet (Niwa und Tamamura, J.Chem.Soc.Chem.Comm., 1984, 817 bzw. De Paoli, Waltmann, Diaz und Bargon, J.Chem.Soc.Chem.Comm., 1984, 1015).

Zu diesem Zweck werden Pt-Elektroden mit einem 1 bis 10 µm dicken Polymerfilm allseitig beschichtet und in einem Elektrolysierbad als Anode geschaltet. Die Elektrolytlösung enthält Pyrrol. Schon nach kurzem Stromfluss scheidet sich Polypyrrol auf dem Isolator-Polymerfilm ab, wobei die guten mechanischen Eigenschaften des Isolator-Polymerfilms erhalten bleiben und die Leitfähigkeit der Zusammensetzung den Wert reiner Polypyrrolfilme erreicht. Pyrrolpolymere besitzen eine hohe Temperaturbeständigkeit selbst bei Temperaturen über 250°C. Im Gegensatz dazu erleidet das bislang verwendete Trägermaterial für elektrolytisch abgeschiedene Polypyrrole bei solch hohen Temperaturen Aenderungen der mechanischen Eigenschaften. Sei es, dass es in den thermopastischen Zustand übergeht oder dass bei diesen Temperaturen bereits eine Zersetzung des Materials eintritt. Polyimide wurden bislang nicht verwendet. Es wurde nun gefunden, dass sich hochtemperaturbeständige Polyimid-Polypyrrollegierungen mit einer hohen Glasumwandlungstemperatur herstellen lassen.

Die vorliegende Erfindung betrifft eine Zusammensetzung enthaltend Polypyrrol und in organischen Lösungsmitteln lösliches Polyimid.

Die löslichen Polyimide, die zur Herstellung der erfindungsgemässen Zusammensetzungen verwendet werden können, lassen sich in folgende Strukturklassen einteilen:

A) In organischen Lösungsmitteln lösliche Verbindungen enthaltend die wiederkehrende Struktureinheit der Formel I

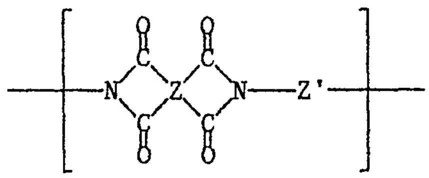 (I),

worin die vier Carbonylgruppen direkt an getrennte Kohlenstoffatome gebunden sind, wobei die Carbonylgruppen sich in ortho- oder peri-Stellung zueinander befinden, so dass fünf- oder sechsgliedrige Imidringe entstehen, wobei
Z ein vierwertiger organischer Rest, der mindestens einen aromatischen Ring enthält, ist und worin Z' ein zweiwertiger aliphatischer, cycloaliphatischer, aromatischer, araliphatischer oder heterozyklischer Rest ist oder wobei Z und/oder Z' Kombinationen dieser Reste innerhalb der gegebenen Definitionen darstellen;

B) in organischen Lösungsmitteln lösliche Verbindungen enthaltend die wiederkehrende Struktureinheit der Formel II

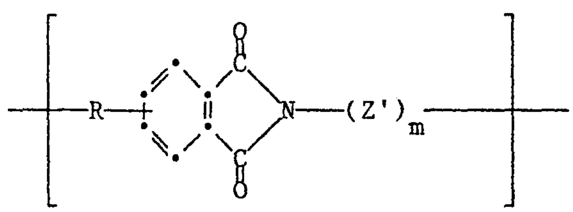 (II),

worin Z' die oben definierte Bedeutung besitzt, worin R eine direkte C-C Bindung ist oder einen der folgenden Reste bedeutet:

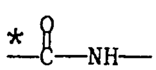 , 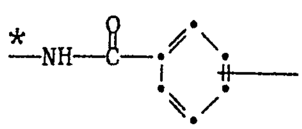 oder 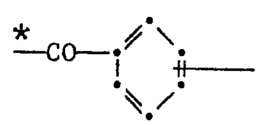 ,

worin m 1 ist, wenn R -CO-NH- darstellt, und im Fall der anderen Reste R 0 bedeutet, wobei die Markierung "*" jeweils die Verknüpfungsstelle mit dem aromatischen Rest darstellt;

C) in organischen Lösungsmitteln lösliche Verbindungen enthaltend die wiederkehrende Struktureinheit der Formel III

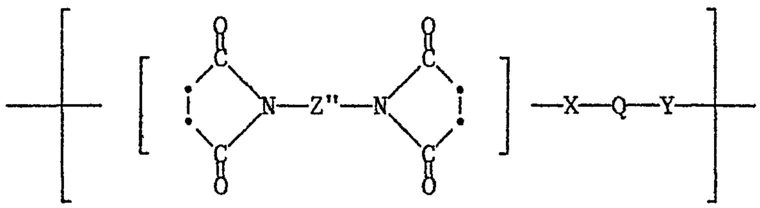

(III),

worin Z" und Q unabhängig voneinander eine der oben für Z' definierten Bedeutungen besitzen und worin X und Y unabhängig voneinander -O- oder -NH- sind.

Insbesondere die Polyimide der Strukturklasse A) sind in der Regel in organischen Lösungsmitteln unlöslich. Da allgemein gültige Beziehungen zwischen Struktur und Löslichkeit eines Polyimids derzeit nicht aufstellbar sind, muss im Einzelfall anhand von Routineversuchen ermittelt werden, ob eine bestimmte Verbindung löslich ist oder nicht, und somit im Rahmen dieser Erfindung als Trägerfilm verwendet werden kann.

Ein Polyimid wird in der Regel dann als löslich angesehen, wenn es sich bei 25°C zu mindestens 1 mg/l, vorzugsweise zu mindestens 1 g/l, in dem betreffenden Lösungsmittel löst.

Zusammenhänge zwischen Molekularstruktur und Löslichkeit von Polyimiden werden von F.W. Harris und Lynn H. Lanier in "Structure-Solubility Relationships in Polyimides" (Academic Press, New York, 1977, S. 183 bis 198) beschrieben. Die dort aufgelisteten löslichen Polyimide lassen sich auch im Rahmen dieser Erfindung als Trägerfilme einsetzen.

Der vierwertige Rest Z kann unter den folgenden allgemeinen Gruppen ausgewählt werden: aromatische, aliphatische, cycloaliphatische, heterocyclische Gruppen, Kombinationen von aromatischen und aliphatischen Gruppen und die entsprechenden substituierten Gruppen davon. Die Gruppen Z umfassen vorzugsweise die folgenden Strukturen:

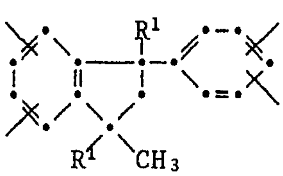 , 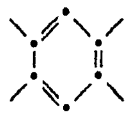 , 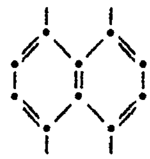 , 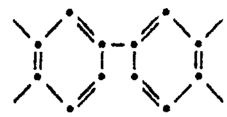 ,

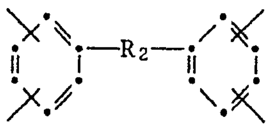 oder 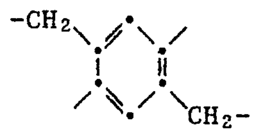

worin $R^1$ Wasserstoff oder $C_1$-$C_5$-Alkyl ist, und
worin $R^2$ ausgewählt wird aus der Gruppe bestehend aus Alkylen mit 1 bis 3 Kohlenstoffatomen,

-O-, -S-, $-SO_2-$, 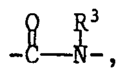 , 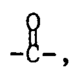 , 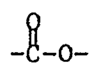 oder 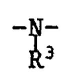 ;

dabei bedeutet $R^3$ Wasserstoff, $C_1$-$C_5$-Alkyl oder Phenyl.

Die vorstehend definierte Gruppe Z' kann vorzugsweise ausgewählt werden unter Alkylengruppen mit 2 bis 12 Kohlenstoffatomen, Cycloalkylengruppen mit 4 bis 6 Kohlenstoffatomen; einer Xylylengruppe, Arylengruppen ausgewählt unter ortho-, meta- oder para-Phenylen, das gegebenenfalls 1-4 $C_1$-$C_5$-Alkylresten trägt, Biphenylen, Naphthylen oder Anthrylen; einer substituierten Arylengruppe der Formel

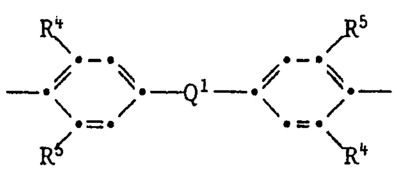 ,

worin $Q^1$ eine kovalente Bindung, -CO-, -O-, -S-, -SO-, $-SO_2-$, -N=N- oder $-NR^1-$, bedeutet oder eine lineare oder verzweigte Alkylengruppe mit 1 bis 3 Kohlenstoffatomen, Arylen, insbesondere die Phenylengruppe, oder eine Dialkyl- oder Diarylsilylgruppe ist und worin $R^4$ und $R^5$ unabhängig voneinander jeweils Wasserstoff, Halogen, insbesondere Chlor oder Brom, Alkyl mit 1 bis 5 Kohlenstoffatomen, insbesondere Methyl, Alkoxy mit 1 bis 5 Kohlenstoffatomen, insbesondere Methoxy, oder Aryl, insbesondere Phenyl, bedeuten; oder Z' ist ein Rest der Formel IX

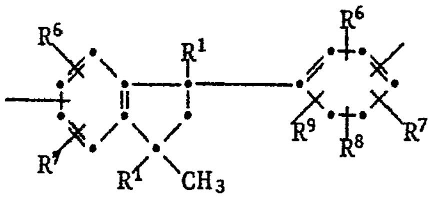

(IX),

worin $R^1$ die oben definierte Bedeutung besitzt und worin $R^6$, $R^7$, $R^8$ und $R^9$ unabhängig voneinander Wasserstoff, Halogen oder $C_1$-$C_5$-Alkyl, vorzugsweise Wasserstoff oder $C_1$-$C_5$-Alkyl, bedeuten.

Die Reste $R^1$, $R^3$, $R^4$, $R^5$, $R^6$, $R^7$, $R^8$, und $R^9$ bedeuten als Alkyl mit 1 bis 5 Kohlenstoffatomen beispielsweise Methyl, Ethyl, n-Propyl, Isopropyl, n-Butyl, sek. Butyl, tert. Butyl, n-Pentyl oder Neopentyl. Bevorzugt wird Methyl.

Als Alkoxy mit 1 bis 5 Kohlenstoffatomen bedeuten $R^4$ und $R^5$ beispielsweise Methoxy, Ethoxy, n-Propoxy, Isopropoxy, n-Butoxy, sek.-Butoxy, tert.-Butoxy, n-Pentoxy oder Neopentoxy. Bevorzugt wird Methoxy.

Als Halogen bedeuten $R^4$, $R^5$, $R^6$, $R^7$, $R^8$ oder $R^9$ Fluor, Chlor, Brom oder Iod. Bevorzugt werden Brom oder Chlor und ganz besonders Chlor.

Als Aryl bedeuten $R^4$ und $R^5$ beispielsweise Phenyl oder Naphthyl, wobei Naphthyl in 1- oder in 2-Position mit dem restlichen System verknüpft sein kann. Bevorzugt wird Phenyl.

Als Alkylengruppe mit 2 bis 12 Kohlenstoffatomen bedeutet Z' geradkettiges oder verzweigtes Alkylen, wie beispielsweise Ethylen, Trimethylen, Tetramethylen, Pentamethylen, Hexamethylen, Heptamethylen, Octamethylen, Nonamethylen, Decamethylen, Undecamethylen, Dodecamethylen, sowie $-C(CH_3)_2-$, $-(CH_2)_3-C(CH_3)_2-(CH_2)_3-$ oder $-(CH_2)_3-CH(CH_3)-(CH_2)_4-$. Bevorzugt werden die drei letztgenannten verzweigten Alkylenreste sowie Hexamethylen.

Als lineare oder verzweigte Alkylengruppe mit 1 bis 3 Kohlenstoffatomen bedeutet $Q^1$ beispielsweise Methylen, Ethylen, Trimethylen, Ethyliden sowie 2-Propyliden.

Bevorzugt sind Methylen und 2-Propyliden.

Als Cycloalkylengruppe mit 4 bis 6 Kohlenstoffatomen bedeutet Z' beispielsweise Cyclobutylen, Cyclopentylen oder Cyclohexylen. Die Reste können in 1,2-, 1,3- oder 1,4-Position mit dem restlichen Molekülgerüst verbunden sein. Bevorzugt wird die 1,4-Verknüpfung. Insbesondere bevorzugt wird Cyclohexylen-1,4.

Bei Z' als Xylylen handelt es sich um das ortho-, metha- oder para-Xylylen. Es kann sich aber auch um Gemische dieser Xylylene handeln. Bevorzugt werden Gemische der Xylylene oder para-Xylylen.

Bei Z' als Tolylen kann die Verknüpfung mit dem Restmolekül in 2,3-, 2,4-, 2,5-, 2,6-, 3,5-, 3,6-, 4,5-, oder 4,6-Position, bezogen auf die Methylgruppe, erfolgen.

Bedeutet Z' Biphenylen, so kann die Verknüpfung mit dem Restmolekül an irgendeiner Stelle des Biphenylens erfolgen. Bevorzugt sind Reste, bei denen jeder Phenylkern des Biphenylens eine Valenz zum Restmolekül ausbildet. Besonders bevorzugt handelt es sich hier um die 4,4'-, 3,3'- oder 2,2'-Derivate, und ganz besonders um das 4,4'-Derivat.

Bei $Q^1$ als Arylen handelt es sich beispielsweise um Phenylen oder um Naphthylen, bevorzugt jedoch um Phenylen. Unter Phenylen wird ortho-, meta- oder para-Phenylen verstanden. Bevorzugt wird para-Phenylen.

Bedeutet $Q^1$ Dialkylsilyl, so handelt es sich beispielsweise um Dimethylsilyl, Diethylsilyl, Di-(n-propyl)-silyl, Di-(isopropyl)-silyl oder Di-(n-butyl)-silyl. Bevorzugt wird Dimethylsilyl.

Bedeutet $Q^1$ Diarylsilyl, so handelt es sich vorzugsweise um Diphenylsilyl.

Bei den Polyimiden der oben erwähnten Strukturtypen A, B oder C handelt es sich vorzugsweise um Verbindungen enthaltend die Struktureinheiten der Formeln I oder II oder III in gleichsinniger Reihenfolge; ganz besonders bevorzugt werden Polyimide bestehend ausschliesslich aus Strukturelementen der Formeln I oder II oder III, sowie aus Kombinationen der im Rahmen der gegebenen Definitionen unterschiedlichen möglichen Struktureinheiten der Formeln I oder II oder III.

Die Kettenlänge der Polyimide kann in weiten Bereichen schwanken. Bevorzugt verwendet man Polyimide enthaltend von 5 bis 1000 der wiederkehrenden Struktureinheiten der Formel I oder II oder III; ganz besonders bevorzugt jedoch Polyimide enthaltend mehr als 10, insbesondere von 10 bis 500 der wiederkehrenden Struktureinheiten der Formel I oder II oder III.

Ganz besonders bevorzugt verwendet man diejenigen Polyimide, die aus wiederkehrenden Struktureinheiten der Formel I bestehen und die in organischen Lösungsmitteln löslich sind.

Von den löslichen Verbindungen enthaltend die wiederkehrende Struktureinheit der Formel I sind insbesondere solche bevorzugt, worin Z einer der oben als bevorzugt definierten Reste oder eine Kombination der Reste ist, worin $R^1$ die oben definierte Bedeutung besitzt, vorzugsweise aber Wasserstoff oder Methyl bedeutet, $R^2$ $-CH_2-$, $-CO-$ oder $-C(CH_3)_2-$ ist, und Z' einer der Reste oder eine Kombination der Reste

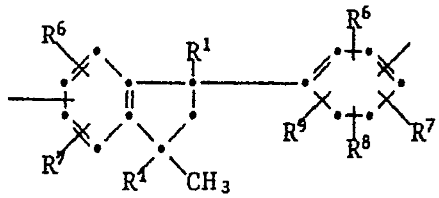 , 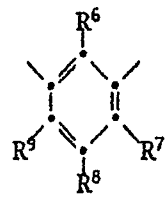 , 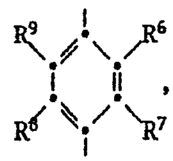 ,

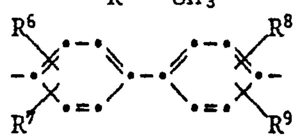 , 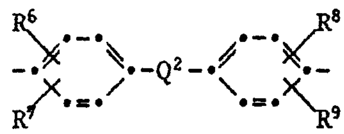 ,

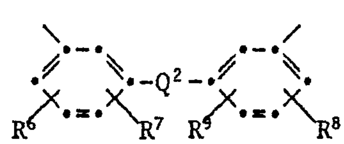 oder 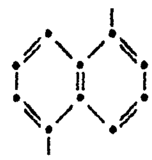

ist, worin $R^1$ und $R^6$ bis $R^9$ die oben definierte Bedeutung besitzen und worin $Q^2$ $-CH_2-$, $-CO-$, $-O-$, $-S-$, $-SO-$, $-SO_2-$ oder $-C(CH_3)_2-$ bedeutet.

Besonders bevorzugt werden auch Polyimide der Formel I, worin Z einer der Reste oder eine Kombination der Reste

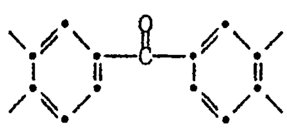 oder 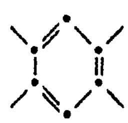

ist, und worin Z' einer der Reste oder eine Kombination der Reste

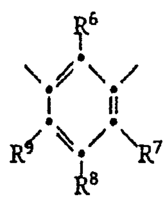 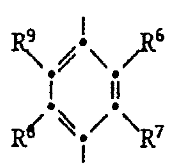 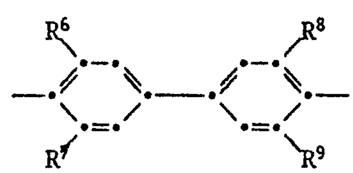 oder

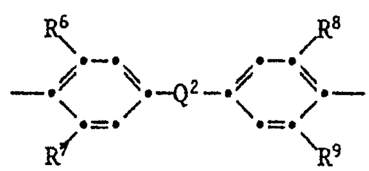

bedeutet, und worin mindestens einer der Reste $R^6$ bis $R^9$ $C_1$-$C_5$-Alkyl ist; dabei besitzen $R^6$ bis $R^9$ und $Q^2$ die weiter oben definierte Bedeutung.

In einer besonders bevorzugten Ausführungsform dieser Erfindung verwendet man lösliche Polyimide enthaltend im wesentlichen die wiederkehrende Struktureinheit der Formel I, worin

1) aus der Gesamtzahl der wiederkehrenden Polyimideinheiten
A) in 0 bis 100 % solcher Einheiten Z ein Phenylindanrest der Strukturformel

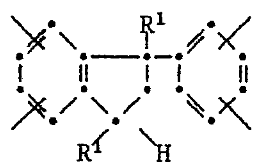

vorkommt, und worin

B) in 0 bis 100 % solcher Einheiten Z' ein Phenylindanrest der Strukturformel

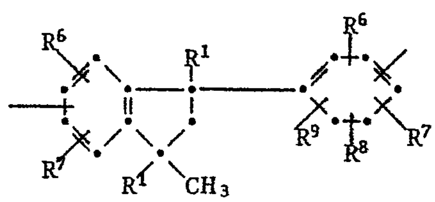

vorkommt, worin $R^1$ und $R^6$ bis $R^9$ die oben definierte Bedeutung besitzen, wobei

2) aus der Gesamtzahl der Reste Z und Z' mindestens 10 % Phenylindanreste sind.

Phenylindanhaltige Polyimide sind in der US-PS 3,856,752 beschrieben. Bezüglich der Herstellung und des bevorzugten Bereiches dieser Verbindungen wird auf die Beschreibung dieser Patentschrift verwiesen.

Ein ebenfalls bevorzugtes Polyimid vom Typ A) enthält als tetravalenten Rest Z Gruppen der Formel

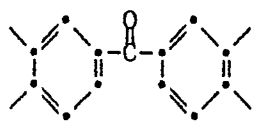 , 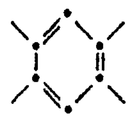 , 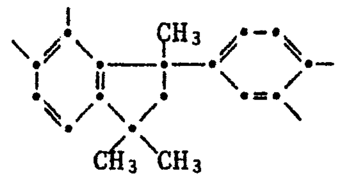 oder

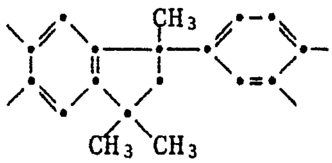

bzw. Mischungen dieser Gruppen, und als bivalenten Rest Z'

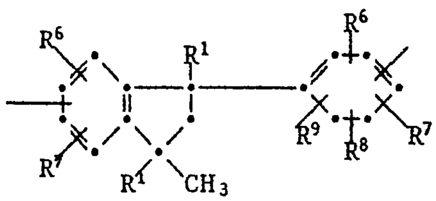 , 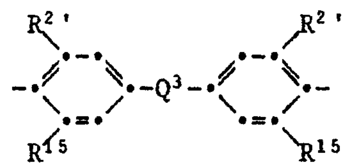 oder

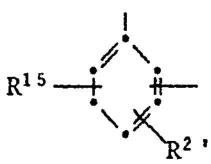

bzw. Mischungen dieser Gruppen; dabei sind aus der Gesamtzahl der Reste Z und Z' mindestens 10 % Phenylindanreste, wie oben definiert; $R^1$ und $R^6$ bis $R^9$ bedeuten unabhängig voneinander Wasserstoff oder Methyl, $R^{2'}$ ist Wasserstoff, Halogen oder $C_1$-$C_5$-Alkyl, bevorzugt Wasserstoff oder Methyl, und $Q^3$ ist eine C-C Bindung, $-CH_2-$, $-C(CH_3)_2-$, -CO-, -O-, -S- oder $-SO_2-$. $R^{15}$ hat dieselbe Bedeutung wie $R^{2'}$.

Ebenfalls bevorzugte Verwendung als Polyimide finden Verbindungen der Formel I enthaltend als Strukturelement Z' nur Phenylindanreste, wie oben definiert.

Auch finden Polyimide der Formel I Beachtung, die als Z' 10 bis 100 % Phenylindanreste, wie oben definiert, enthalten, und die 0 bis 90 % an Resten der Formeln

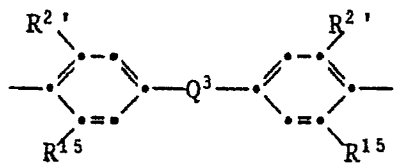 oder 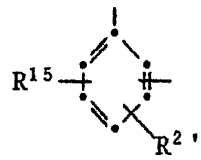

bzw. deren Mischungen enthalten; dabei bedeuten $R^{2'}$ und/oder $R^{15}$ Wasserstoff oder $C_1$-$C_5$-Alkyl, bevorzugt jedoch Wasserstoff oder Methyl und ganz besonders Wasserstoff.

Ganz besonderes Interesse finden Polyimide der Formel I, enthaltend als Gruppen Z 0-100 % der Reste

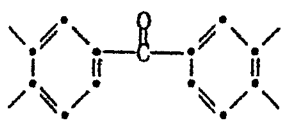 oder 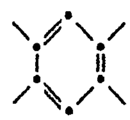

bzw. Mischungen dieser Reste, und 100 bis 0 % der Reste

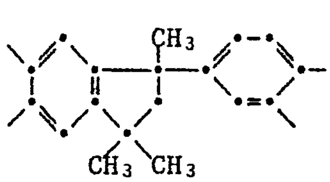 oder 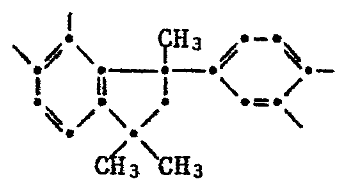

bzw. Mischungen davon; insgesamt jedoch mindestens 10 % Phenylindanreste, bezogen auf Z und Z'.

Weiterhin bleiben zu erwähnen Polyimide der Formel I enthaltend als Z 100 % der Reste

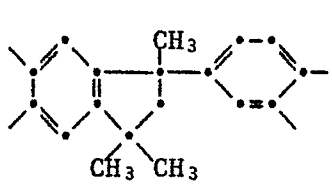 und/oder 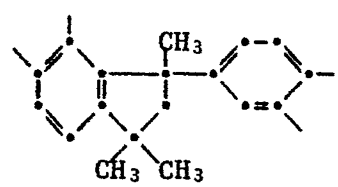 .

Ganz besonders bevorzugt in den erfindungsgemässen Zusammensetzungen werden Polyimide der Formel I enthaltend als Z jeweils 100 % von Gruppen der Formel

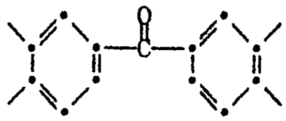 oder der Formel 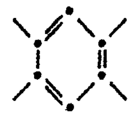

und enthaltend als Z' ausschliesslich Reste der Formel

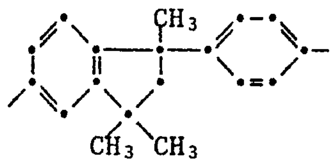 und/oder 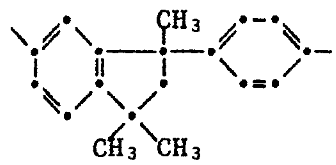 .

Schliesslich finden Polyimide der Formel I Beachtung, deren Gruppen Z

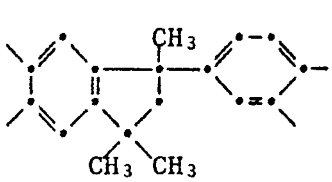 und/oder 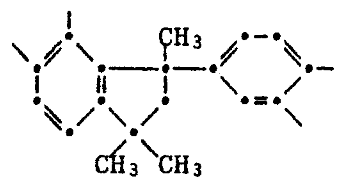 .

bedeuten und deren Gruppen Z'

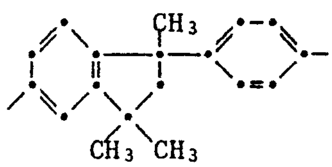 und/oder 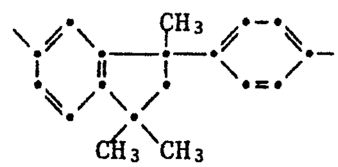 .

sind.

Ganz besonders bevorzugt in den erfindungsgemässen Zusammensetzungen werden Polyimide der Formel I enthaltend als Gruppe Z

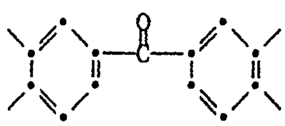 oder 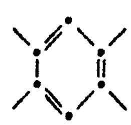

und enthaltend als Gruppe Z' ausschliesslich

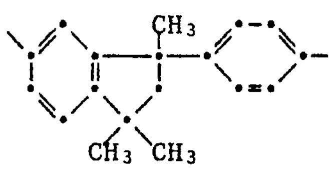 .

Schliesslich bleiben noch Polyimide der Formel I zu erwähnen, bei denen Z

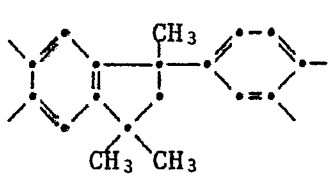 und/oder 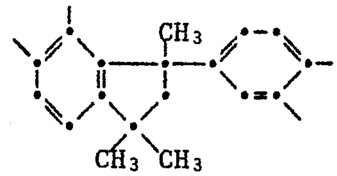 .

bedeuten und bei denen Z'

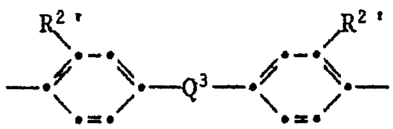 oder 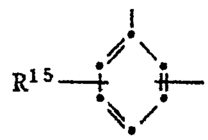

ist, worin $R^{2'}$, $R^{15}$ und $Q^3$ die oben definierte Bedeutung besitzen.

Auch finden Polyimide der Formel I Beachtung, worin die Gruppe Z eine der Bedeutungen

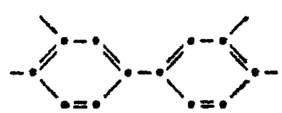 , 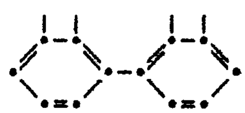 , 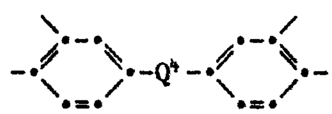 ,

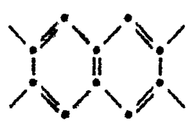 oder 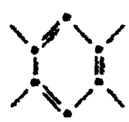

besitzt und worin die Gruppe Z'

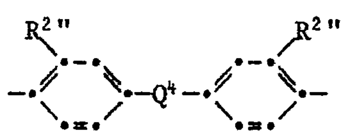 , 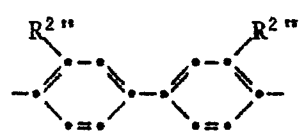 , 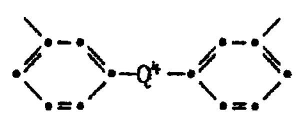 ,

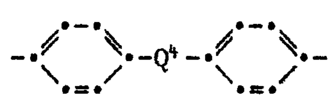 , 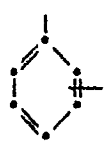 , 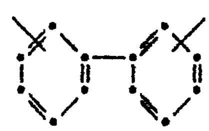 oder 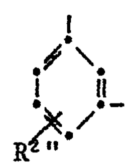

bedeutet; dabei sind $Q^4$ -O-, -S-, $-SO_2-$, $-CH_2-$, -CO- oder $-C(CH_3)_2-$ und $R^{2''}$ ist $C_1$-$C_5$-Alkoxy, Halogen, -COOH, -OH oder $-SO_3H$; und mindestens 30 % der Gruppen Z sind dabei ein Rest der Formel

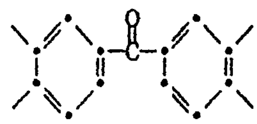

und mindestens 30 % der Gruppen Z' sind Reste der Formel

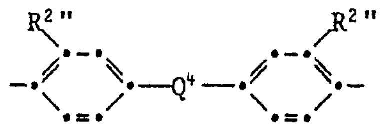 und/oder 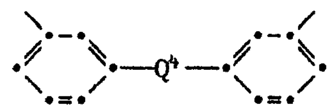

und/oder 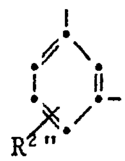 ;

wobei besagte Polyimide zu mehr als 10 Gew.% in Phenol löslich sind und wobei 0,5 g/100 ml von besagtem Polyimid in m-Kresol eine inhärente Viskosität von mehr als 0,05 (bei 30°C) besitzen. Polyimide dieses Typs sind in der US-PS 3,666,709 beschrieben.

Ebenfalls Beachtung finden Polyimide der Formel I, worin Z

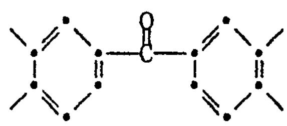

ist, und worin 10 bis 90 % der Reste Z' 4,4'-Diphenylmethan bedeuten, und worin der übrige Anteil der Reste Z'

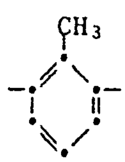 und/oder 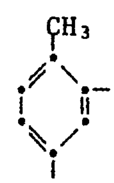

ist.

Verbindungen dieses Typs, deren Herstellung und Verwendung sind in der US-PS 3,708,458 beschrieben.

Von den löslichen Polyimiden der Formel II (Typ B) sind insbesondere solche bevorzugt, deren Rest R sich in meta-Position zu einer der Carbonylgruppen des Imidsystems befindet.

Besondere Beachtung finden lösliche Polyimide der Formel II, worin R eine der folgenden Bedeutungen besitzt:

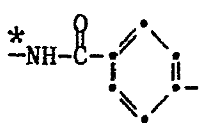 oder 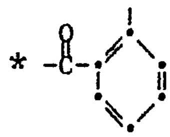 oder 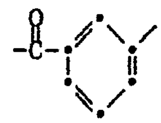 .

Auch verwendet man vorzugsweise Verbindungen der Formel II mit m=0.

Enthalten die Verbindungen der Formel II Reste Z', so handelt es sich dabei vorzugsweise um die bereits weiter oben erwähnten Gruppierungen, ganz besonders jedoch um 4,4'-Diphenylmethan, 4,4'-Diphenylether oder 4,4'-Diphenylsulphon.

Werden lösliche Polyimide der Formel III (Typ C) verwendet, so handelt es sich dabei vorzugsweise um Verbindungen, worin Z" ein aromatischer Rest ist und worin Q eine Alkylengruppe mit 2 bis 12 Kohlenstoffatomen oder eine Arylengruppe ausgewählt aus ortho-, meta- oder para-Phenylen oder -Tolylen oder unter einer Arylgruppe der Formel

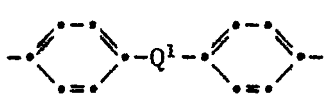

bedeutet; dabei besitzt $Q^1$ eine der weiter oben definierten Bedeutungen, ist jedoch ganz besonders bevorzugt -O-, -S-, $-SO_2-$, -CO-, $-CH_2-$ oder $-C(CH_3)_2-$.

Die Reste Z" und Q können die gleiche Bedeutung besitzen, sie können aber auch durchaus unterschiedlich sein.

X und Y haben vorzugsweise die gleiche Bedeutung. Ganz besonders bevorzugt eingesetzt werden Verbindungen der Formel III, worin X und Y -NH- sind.

Unter den aromatischen Resten Z" der Verbindung III sind insbesondere ortho-, meta- oder para-Phenylen, sowie Tolylen oder Xylylen und 4,4'-Biphenylen, 2,2'-Biphenylen oder Reste der Formel

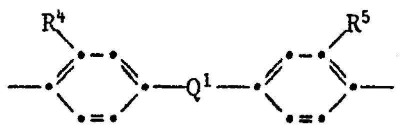

zu erwähnen; dabei besitzen $R^4$, $R^5$ und $Q_1$ die bereits weiter oben definierten Bedeutungen und Bevorzugungen.

Die Herstellung der Polyimide kann auf verschiedenen Wegen erfolgen. Eine Methode geht von der Umsetzung aromatischer Tetracarbonsäuren aus, deren Carboxylgruppen jeweils paarweise in ortho-Position zueinander stehen. Diese Tetracarbonsäuren oder ihre Dianhydride werden mit bifunktionellen primären Aminen zu Polyamidsäuren umgesetzt. Diese Zwischenprodukte sind in der Regel löslich und können gegebenenfalls zu Formkörpern verarbeitet werden. In einer zweiten Stufe zyklisiert man die Polyamidsäure zum Polyimid.

Anstelle der Tetracarbonsäuren können auch deren funktionalisierte Derivate wie beispielsweise Carbonsäurechloride oder Carbonsäureester eingesetzt werden.

Die Bildung der Amidsäure wird gegebenenfalls in der Schmelze durchgeführt, vorzugsweise jedoch in polaren Lösungsmitteln, wie beispielsweise Dimethylformamid, Dimethylacetamid, Dimethylsulfoxid, N-Methylpyrrolidon oder m-Kresol; dabei wird die Reaktionstemperatur vorzugsweise nicht über 50°C steigen gelassen, um eine vorzeitige Zyklisierung zum Polyimid zu unterbinden.

Die Zyklisierungsstufe wird vorzugsweise bei Temperaturen oberhalb 150°C durchgeführt und gegebenenfalls wird ein Dehydroatisierungsmittel, beispielsweise Acetanhydrid, zugefügt.

Ein weiterer Syntheseweg zu Polyimiden verwendet Tetracarbonsäureanhydride, die mit Di-isocyanaten anstelle von Diaminen umgesetzt werden. Diese Reaktionsfolge führt unter $CO_2$ Abspaltung in der Regel direkt zu den Polyimiden; es ist aber auch möglich, Polyamidsäuren zu erhalten, wenn man Tetracarbonsäuren als Ausgangsmaterialien einsetzt. Polyimide des Typs C können durch Umsetzung von Bis-maleinimiden mit primären Diaminen oder mit Diolen erhalten werden. Solche Bis-maleinimide lassen sich auch als bifunktionelle Dienophile in einer Diels-Alder Reaktion mit Bis-dienen zu Polyimiden umsetzen.

Eine Uebersicht über die einzelnen Reaktionswege zur Herstellung von Polyimiden bzw. über verschiedene Typen von Polyimiden ist in Encycl. Chem. Tech., 18, 709-719 (1982) zu finden.

Monomere Pyrrole, die polymerisiert werden können, sind Pyrrol oder substituierte Pyrrole, die C- und/oder N-substituiert sein können. Diese Pyrrole müssen mindestens zwei Wasserstoffatome am Kern (C-gebunden) aufweisen, damit die Polymerisation ablaufen kann.

Insbesondere versteht man unter dem Begriff Polypyrrol Homo- oder Copolymerisate von Pyrrol und/oder substituiertem Pyrrol oder Copolymerisate von Pyrrol und/oder substituiertem Pyrrol mit fünf- oder sechsgliedrigen heteroaromatischen Verbindungen.

Die monomeren Pyrrole besitzen vorzugsweise die Struktur der Formel X

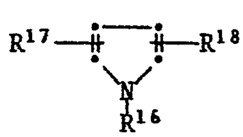

(X),

worin $R^{16}$ Wasserstoff, Alkyl, Cycloalkyl, Aryl, Aralkyl oder Alkaryl bedeutet, wobei besagte organische Reste gegebenenfalls durch $-COR^{20}$, $-COOR^{20}$, $-SO_2R^{20}$, $-SO_3R^{20}$, $-PO_3R^{20}R^{21}$, $-PO_2R^{20}$, $-NR^{20}R^{21}$, $-OR^{20}$, $-SR^{20}$, $-CN$ oder $-SiR^{22}R^{23}R^{24}$ substituiert sind, oder worin $R^{16}$ auch $-CN$, $-SO_2R^{20}$, $-SO_3R^{20}$, $-COR^{20}$, $-PO_2R^{20}$ oder $-SiR_3^{22}$ bedeutet,

 

$R^{20}$ und $R^{21}$ unabhängig voneinander Wasserstoff, Alkyl, Aryl oder Aralkyl sind, $R^{22}$, $R^{23}$ und $R^{24}$ unabhängig voneinander Alkyl oder Phenyl bedeuten, $R^{17}$ und $R^{18}$ unabhängig voneinander Wasserstoff, Alkyl, Cycloalkyl, Aryl, Aralkyl, Alkaryl, $-COR^{19}$, -CN oder Halogen bedeuten und $R^{19}$ Wasserstoff, Alkyl oder Aryl ist.

Als Alkyl bedeuten $R^{16}$, $R^{17}$, $R^{18}$, $R^{19}$, $R^{20}$, $R^{21}$, $R^{22}$, $R^{23}$ und $R^{24}$ vorzugsweise $C_1$-$C_{20}$-Alkyl und sind dann beispielsweise Methyl, Ethyl, Propyl, Butyl, Cetyl, Lauryl oder Stearyl. Besonders bevorzugt wird Methyl.

Als Cycloalkyl bedeuten $R^{16}$, $R^{17}$ oder $R^{18}$ vorzugsweise $C_5$-$C_7$-Cycloalkyl, sind also Cyclopentyl, Cyclohexyl oder Cycloheptyl, besonders bevorzugt jedoch Cyclohexyl.

Als Halogen bedeuten $R^{17}$ oder $R^{18}$ Fluor, Chlor, Brom oder Iod, bevorzugt Brom oder Chlor.

Bedeuten irgendwelche Reste Aryl, so handelt es sich dabei vorzugsweise um Phenyl oder um Naphthyl, insbesondere jedoch um Phenyl.

Handelt es sich bei irgendwelchen Resten um Aralkyl, so ist vorzugsweise $C_7$-$C_{14}$Aralkyl gemeint, insbesondere jedoch Benzyl.

Unter Alkaryl versteht man bevorzugt $C_7$-$C_{14}$Alkaryl, ganz besonders bevorzugt werden Tolyl oder Xylyl.

Sind irgendwelche Reste substituiert, so handelt es sich bevorzugt um mono- oder disubstituierte Gruppen, ganz besonders bevorzugt um monosubstituierte Reste.

Als Pyrrole bevorzugt werden zum einen das unsubstituierte Pyrrol, die N-Alkylpyrrole, insbesondere das N-Methylpyrrol, oder die N-Arylpyrrole, insbesondere das N-Phenylpyrrol, sowie die an den

Kohlenstoffatomen monoalkyl- oder dialkylsubstituierten Pyrrole oder die an den Kohlenstoffatomen mono- oder dihalogensubstituierten Pyrrole.

Von diesen letzteren beiden Verbindungsklassen werden insbesondere die Mono- oder die Dimethylverbindung oder die Monobrom- oder die Dibromverbindung sowie die Monochlor- oder Dichlorverbindung bevorzugt.

Kohlenstoffsubstituierte Pyrrole sind vorzugsweise in 3- und/oder 4-Position substituiert.

Unter den Pyrrolpolymeren im Rahmen dieser Erfindung werden sowohl Homo- als auch Copolymere von Pyrrolen ganz allgemein verstanden.

Hierzu gehören insbesondere die Homopolymeren des unsubstituierten Pyrrols selber. Es lassen sich aber auch Copolymere der oben genannten Pyrrole, bevorzugt des unsubstituierten Pyrrols, mit anderen Comonomeren, insbesondere anderen fünf- und/oder sechsgliedrigen heteroaromatischen Verbindungen herstellen. Unter diesen heteroaromatischen Verbindungen sind besonders bevorzugt: Furan, Thiophen, Thiazol, Oxazol, Thiadiazol, Imidazol, Pyridin, 3,5-Dimethylpyridin, Pyrazin, Pyridazin, 3,5-Dimethylpyrazin, Carbazol oder Phenothiazin.

Copolymere dieses Typs und deren Herstellung sind beispielsweise in der DE-OS 3,223,544 beschrieben.

Ganz besonders bevorzugt werden Copolymere aus unsubstituiertem Pyrrol und gegebenenfalls substituiertem N-Methylpyrrol, sowie Copolymere aus unsubstituiertem Pyrrol oder N-Methylpyrrol und Thiophen oder Furan.

Die Herstellung der erfindungsgemässen polypyrrolhaltigen Polyimidzusammensetzungen erfolgt durch Polymerisation des monomeren Pyrrols in Gegenwart eines Polyimidfilms. Diese Polymerisation kann elektrolytisch erfolgen, es kann aber auch jedes andere Polymerisationsverfahren verwendet werden, beispielsweise eine Polymerisation unter Verwendung von Redoxpaaren.

Polypyrrol ist im geladenen oder oxidierten Zustand elektrisch (elektronisch) leitend. Es wird in diesem Zustand durch Elektropolymerisation erzeugt. Während des Elektropolymerisationsvorganges wird zum Ausgleich der positiven Ladung am Polymerisat-Grundgerüst ein Gegenanion in das Material eingebaut.

Polypyrrol kann aber auch entladen und in eine reduzierte (gelbe) Form überführt werden. In diesem Zustand ist es ein elektrischer Isolator.

Unter dem Begriff "Polypyrrol" im Rahmen dieser Erfindung werden sowohl die oxidierte als auch die reduzierte Form verstanden, bevorzugt jedoch die oxidierte Form.

Vorzugsweise stellt man die erfindungsgemässen Zusammensetzungen her, indem man ein in einem polaren Lösungsmittel gelöstes monomeres Pyrrol an einer mit dem betreffenden Polyimidfilm in Kontakt stehenden Elektrode anodisch oxidiert. Ganz besonders bevorzugt verwendet man Polyimid beschichtete Elektroden. Das Lösungsmittel enthält ein Leitsalz, dessen Anionen wie oben erwähnt in den Polypyrrolfilm eingebaut werden und zu einer Erhöhung der Leitfähigkeit führen. Das Leitsalz wird in Form der jeweiligen Protonensäure oder eines ihrer Salze, bevorzugt der Tetraalkylammonium- oder Alkalimetallsalze, dem Elektrolyten zugegeben.

Die Erfindung betrifft daher vorzugsweise leitfähige Polyimid-Polypyrrol-zusammensetzungen enthaltend Polypyrrol in der oxidierten Form und als Gegenanion ein Anion ausgewählt aus der Gruppe bestehend aus $BF_4^-$, $PF_6^-$, $AsF_6^-$, $SbF_6^-$, $SbCl_6^-$, $ClO_4^-$, $IO_4^-$, $HSO_4^-$, $SO_4^{2-}$, $CF_3SO_3^-$, $CH_3C_6H_4SO_3^-$, $CF_3COO^-$, $HC_2O_4^-$ oder $[Fe(CN)_6]^{3-}$, sowie auch aus Alkylsulfat, Alkylsulfonat, Alkylphosphat oder Alkylphosphonat sowie Kombinationen dieser Anionen.

Der Einbau von Gegenanionen und die damit verbundene Erhöhung der Leitfähigkeit ist bekannt und beispielsweise in J. Electrochem. Soc. 128, 2596 (1981) beschrieben.

Die Erfindung betrifft daher auch ein Verfahren zur Herstellung von Polyimid-Polypyrrolfilmen durch anodische Oxidation eines gelösten Pyrrols und gegebenenfalls eines geeigneten Comonomeren an einer Elektrode, die in Kontakt zu einem Polymerfilm steht, dadurch gekennzeichnet, dass man als Material für den Polymerfilm ein Polyimid verwendet, das in organischen Lösungsmitteln löslich ist.

Die Elektrolyse wird vorzugsweise in polaren organischen Lösungsmitteln, die Pyrrol und Leitsalz nicht jedoch den Polyimidfilm auf der Elektrode lösen, durchgeführt. Zu diesen organischen Lösungsmitteln zählen beispielsweise Alkohole, Polyole, organische Carbonate, wie z.B. Propylencarbonat, Ether wie 1,2-Dimethoxyethan, Dioxan, THF und Methyltetrahydrofuran, Nitrile wie Acetonitril und Benzonitril, N-Methylpyrrolidon, Methylenchlorid, Dimethylsulfoxid, Dimethylformamid, oder Aceton.

Vorzugsweise verwendet man Acetonitril als Lösungsmittel.

Werden mit Wasser mischbare Lösungsmittel verwendet, so können zur Erhöhung der elektrischen Leitfähigkeit geringe Mengen an Wasser, im allg. bis zu 3 % bezogen auf das organische Lösungsmittel zugesetzt werden. Bevorzugte Lösungsmittel dieser Art sind Alkohole niedriger Kohlenstoffzahl ($C_1$-$C_4$), Ether, wie Dioxan, Tetrahydrofuran oder 1,2-Dimethoxyethan, Eisessig, Aceton, Dimethylformamid, N-Methylpyrrolidon, Acetonitril oder Propylencarbonat.

Es lassen sich aber auch zweiphasige Elektrolytbäder verwenden. Darunter versteht man Gemische von Wasser, enthaltend das gelöste Pyrrol und gegebenenfalls die copolymerisierbare Komponente, und ein organisches Verdünnungsmittel, das mit Wasser nicht mischbar ist.

Beispiele für solche Verdünnungsmittel sind organische Kohlenwasserstoffe, wie aliphatische oder aromatische Kohlenwasserstoffe sowie halogenierte aliphatische oder aromatische Kohlenwasserstoffe. Spezielle Beispiele davon sind Hexan, Toluol, 1,2-Dichlorethan, Dichlormethan, Tetrachlormethan oder Chlorbenzol.

Das Elektrolysierbad kann darüber hinaus noch andere Bestandteile enthalten, die den erfindungsgemässen Zusammensetzungen gewünschte Eigenschaften verleihen.

Dazu zählen beispielsweise Weichmacher, Redoxpaare, Netzmittel oder Emulgatoren. Bezüglich dieser Zusätze wird auf die DE-OS 3,402,133 verwiesen, in der solche Elektrolytsysteme und deren Auswirkung auf die Eigenschaften der fertigen Polypyrrolfilme ausführlich beschrieben sind.

Der Elektrolyt enthält das monomere Pyrrol und gegebenenfalls die comonomere Komponente gelöst.

Die Menge dieses oder dieser Monomeren im Elektrolysebad kann innerhalb eines breiten Bereiches schwanken; dabei muss aber die Gesamtmenge des gelösten Monomeren grösser sein als der zur Bildung der gesamten Polymerisatmenge erforderliche Teil.

Die Menge an Pyrrol und gegebenenfalls comonomerer Komponente, die in der Elektrolyselösung vorhanden ist, muss ausreichend sein, um eine vernünftige Umsetzungsgeschwindigkeit zu gewährleisten. In der Regel sind Konzentrationen von mehr als $10^{-3}$ Mol pro Liter nötig. Als obere Grenze der Monomerenkonzentration ist die Sättigungskonzentration des Pyrrols bzw. des Comonomeren im jeweiligen Elektrolyten anzusehen.

Vorzugsweise verwendet man 0,01 Mol pro Liter bis 0,1 Mol pro Liter gelöstes Pyrrol.

Die Leitsalzkonzentration beträgt vorzugsweise 0,001 bis 1 Mol pro Liter. Es kann auch hier eine Konzentration bis zur Sättigung des Elektrolyten verwendet werden.

Ein besonderes Augenmerk bei der Durchführung des erfindungsgemässen Verfahrens ist auf die Elektroden zu richten.

Man verwendet Elektroden, die mit dem jeweiligen Polyimid beschichtet sind. Als Elektrodenmaterialien kommen gängige leitfähige Stoffe, beispielsweise Metalle wie Nickel oder Stahl in Frage, die für die Polypyrrolsynthese eingesetzt werden können. Vorzugsweise verwendet man Graphit, Stahl oder Edelmetalle, insbesondere Platin. Man kann aber auch Elektroden verwenden, die aus elektrisch leitfähigen Polymeren gebildet werden, beispielsweise aus durch anodische Oxidation gebildetem Polypyrrol oder Polythiophen, aus dotiertem p-leitendem Polyacetylen oder aus dotiertem p-leitendem Polyphenylen.

Die Form der Elektroden ist beliebig. Es können plattenförmige Elektroden in paralleler Anordnung verwendet werden oder aber zylinderförmige Elektroden, die gegebenenfalls um die Längsachse rotiert werden können.

Die Beschichtung der Elektroden kann auf unterschiedlichste Art und Weise erfolgen beispielsweise durch Spin- oder Curtain-Coating. Je nach Elektrodenform und -material sind unterschiedliche Anforderungen an den Beschichtungsvorgang bzw. an das Elektrodenmaterial als Substrat zu stellen.

In einem allgemein anwendbaren und daher bevorzugten Verfahren verwendet man eine Polyimidlösung, bringt diese auf die Elektrodenoberfläche auf und lässt das Lösungsmittel verdunsten oder entfernt das Lösungsmittel durch Anlegen eines Vakuums. Zurück bleibt ein Polyimidfilm. Die Dicke dieses Films kann über die Konzentration bzw. die Menge der verwendeten Lösung kontrolliert werden.

Bevorzugt verwendet man Lösungen von Polyimiden mit einer gegenüber dem reinen Lösungsmittel um mehr als 1 %, ganz besonders bevorzugt um mehr als 5 %, vergrösserten Viskosität.

Als organische Lösungsmittel für lösliche Polyimide sind beispielsweise zu nennen:
N,N-Dimethylformamid, N,N-Dimethylacetamid, N-Methyl-2-pyrrolidon, N,N-Diethylformamid, N,N-Diethylacetamid, N-Methylcaptolactam, Dioxan, Dimethylsulfoxyd, Tetramethylharnstoff, Pyridin, Dimethylsulfon, Hexamethylphosphoramid, Tetramethylensulfon, Formamid, N-Methylformamid, γ-Butyrolacton, Tetrahydrofuran, m-Kresol, Phenol, 2-Methoxyethylacetat, 1,2-Dimethoxyethan, Bis-(2-methoxyethyl)-ether, Chloroform, Nitrobenzol.

Die Lösungsmittel können allein oder in Kombination von Lösungsmitteln oder in Kombination mit Verdünnungsmitteln, wie Benzol, Benzonitril, Xylol, Toluol und Cyclohexan verwendet werden.

Es gibt jedoch auch Polyimide, die bereits in Lösungsmitteln mit schwächerer Lösekraft löslich sind. Beispiele für solche Lösungsmittel sind aliphatische Ketone, wie Cyclopentanon, Cyclohexanon, Cycloheptanon, Cyclooctanon, 4-Methylcyclohexanon, 3-Methylcyclohexanon oder 2-Methylcyclohexanon; aromatisch-aliphatische Ketone, wie Acetophenon, Propiophenon oder Butyrophenon; chlorierte Kohlenwasserstoffe, wie Methylenchlorid, Chloroform, Tetrachlorethylen, Chlorbenzol oder o-Dichlorbenzol; Ether, wie Ethylenglykoldimethylether, Diethylenglykoldimethylether, Tetrahydrofuran oder Dioxan; Etheracetale, wie Methylglykolacetat oder Ethylglykolacetat; sowie andere polare aprotische Lösungsmittel, wie Propylencarbonat oder Isophoron, die eine etwas schwächere Lösekraft als die stark lösenden polar aprotischen Lösungsmittel, wie N-Methylpyrrolidon, γ-Butyrolacton oder N,N-Dimethylacetamid, besitzen.

Die Dicke der auf der Elektrode aufzubringenden Polyimidfilme beträgt vorzugsweise nicht mehr als 50 µm, ganz besonders bevorzugt jedoch weniger als 10 µm.

Die Elektrolyse wird vorzugsweise mit einer einfachen Elektrolyseanordnung bestehend aus einer Zelle ohne Diaphragma und zwei Elektroden, bevorzugt Stahl oder Platinelektroden, durchgeführt. Zumindest die Anode, auf der sich das Polypyrrol später abscheidet, muss flächig ausgebildet und mit einem Polyimidfilm beschichtet sein.

Auch andere Elektrolyseanordnungen, wie beispielsweise Zellen mit Diaphragma oder solche mit Referenzelektrode zur exakten Potentialbestimmung, können verwendet werden. Zur Kontrolle der abgeschiedenen Polypyrrolmenge ist eine Messung der Strommenge (Ampere*sec) angebracht.

Die Elektrolyselösung kann während der Elektropolymerisation der Monomeren bewegt werden. Die Bewegung kann in irgendeiner der üblichen Arten erreicht werden, beispielsweise durch starkes Rühren mit Flügelrührern, Magnetrührern, Ultraschall, Vibration oder durch Hindurchleiten von Gasen durch den Elektrolyten (einschliesslich der an der Kathode erzeugten Gase). Das Rühren kann aber auch durch Bewegung der Elektroden erfolgen. Zur Elektropolymerisation wird an die Elektroden eine Spannung angelegt. Diese Spannung wird so gewählt, dass sie ausreicht, um die Reaktion durchzuführen. Dabei kann es sich um eine Gleichspannung oder eine Wechselspannung handeln, der ein Gleichspannungsanteil überlagert ist. Wechselspannungen können unterschiedlichste Zeitverläufe aufweisen; es kommen beispielsweise sinusförmige oder rechteckige Spannungsverläufe in Frage. Bevorzugt verwendet man Gleichspannungen.

Die Spannung zwischen den Elektroden soll ausreichen, um die Monomeren zu oxidieren, ohne wesentliche Aenderungen im Bad zu erzeugen, beispielsweise durch Abbau von Bestandteilen des Bades.

Im allgemeinen werden Stromdichten von bis zu 2 $A/cm^2$ verwendet, vorzugsweise jedoch Stromdichten von weniger als 500 $mA/cm^2$.

Die Elektrolyse kann auch unter Intertgas durchgeführt werden; ebenso kann man an der Luft elektrolysieren.

Bei der Elektrolyse wird das monomere Pyrrol an der Anode oxidiert. Während der Elektrolyse wird zweckmässig eine Temperatur des Elektrolyten zwischen -20° und +30°C eingehalten. Es können aber auch davon abweichende Temperaturen vorkommen. Die Temperaturgrenzen richten sich in erster Linie nach der Elektrolytlösung (Erstarrungs- bzw. Verdampfungspunkt). Vorzugsweise elektrolysiert man bei Raumtemperatur.

Die auf den Polyimidfilm abzuscheidende Polypyrrolmenge richtet sich ganz nach dem beabsichtigten Verwendungszweck der Folien, und kann vom Fachmann anhand von Routineversuchen schnell ermittelt werden.

Die während der Elektrolyse in Gegenwart von Leitsalzen anodisch abgeschiedenen Polypyrrolfilme werden zur Entfernung von anhaftendem Leitsalz vorteilhafterweise mit Lösungsmittel gewaschen und bei Temperaturen ≥50°C getrocknet. Nach der Trocknung lässt sich der Polyimid/Polypyrrol-Film leicht von der Elektrode lösen.

Die erfindungsgemässen Zusammensetzungen lassen sich zur Herstellung selbsttragender, elektrisch leitfähiger Filme mit hoher Glasumwandlungstemperatur und Reissfestigkeit verwenden. Solche Filme könne auf dem Gebiet der Elektronik bzw. der Mikroelektronik Anwendung finden, beispielsweise als leitfähige Verbundwerkstoffe bei der Herstellung von elektrischen Leitern, Elektroden, Batterien, Schaltern oder Halbleiterbauteilen, sowie bei der antistatischen Ausrüstung oder der elektromagnetischen Abschirmung von elektronischen Bauteilen.

Die erfindungsgemässen Filme vereinen so vorteilhafte Eigenschaften wie eine hohe elektrische Leitfähigkeit, hohe mechanische Stabilität, hohe thermische Beanspruchbarkeit ($T_g$>250°C) und chemische Beständigkeit.

Beispiele

Allgemeine Arbeitsvorschrift: In einem Glasgefäss werden 250 ml Elektrolytlösung (0,1 mol/l Leitsalz, 0,05 mol/l Pyrrol(derivat) und gegebenenfalls Comonomeres, Lösungsmittel Acetonitril mit einem Wassergehalt von 1 %) vorgelegt. Zwei Elektroden (Grösse 50x20x1 mm) von denen die Anode vollseitig mit einem Polyimidfilm beschichtet*) ist, werden im Abstand von 4 cm in die Lösung gebracht. Unter Rühren und Argonspülung wird für die Dauer von 5, 10 oder 30 Min. elektrolysiert. Die Anode färbt sich rasch dunkelgrün bis schwarz durch Bildung einer Polymerlegierung aus dem Polyimid und Polypyrrol. Nach Spülen der Anode mit Acetonitril und Trocknung bei 60°C lässt sich der Polymid/Polypyrrol-Film von der Unterlage entfernen. Die Glasübergangstemperatur ($T_g$) des Compositfilmes entspricht derjenigen des reinen Polyimidfilmes.

*) Die Beschichtung erfolgt durch Spin-Coating

Beispiele 1-6: Gemäss der voranstehenden allgemeinen Arbeitsvorschrift werden Polyimid/Polypyrrol-Filme hergestellt. Bei dem verwendeten Polyimid handelt es sich jeweils um DAPI-Polyimid*). Die eingesetzten Pyrrolmonomeren, das verwendete Leitsalz und einige Eigenschaften der Compositfilme sind in Tab. Ia zu finden, während Parameter, die bei der Filmherstellung variiert werden, in Tab. Ib aufgelistet sind. Sämtliche Compositfilme sind ohne Bruch knick- und faltbar, während die entsprechenden reinen Polypyrrolfilme zerbrechen.

*) DAPI-Polyimid besitzt folgende Struktureinheit:

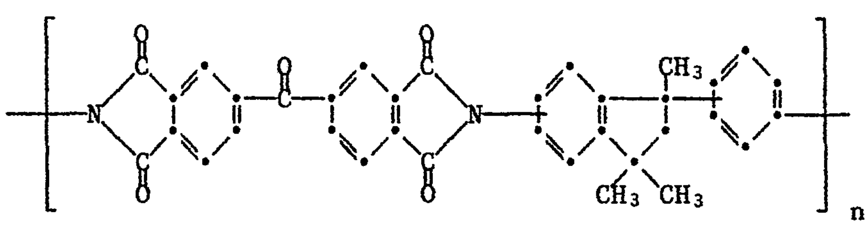

Tabelle Ia:

| Beisp. Nr. | Monomer(gemisch) zur Herstellung des Polypyrrolfilms | Leitsalz | el. Leitfähigkeit des Compositfilms (S/cm) | $T_g$ des Compositfilms (°C) |
|---|---|---|---|---|
| 1 | 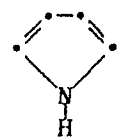 | $(C_4H_9)_4N^{\oplus}$ $BF_4^{\ominus}$ | 0,5-10 | 320 |
| 2 | 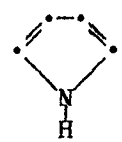 | $(C_4H_9)_4N^{\oplus}$ $PF_6^{\ominus}$ | 15-18 | 320 |
| 3 | 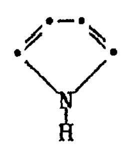 | $(C_4H_9)_4N^{\oplus}$ $ClO_4^{\ominus}$ | 3-4 | 320 |
| 4 | 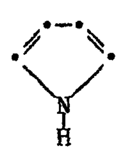 + 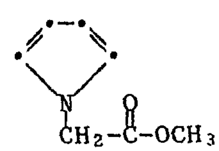 1 : 3 | $(C_4H_9)_4N^{\oplus}$ $BF_4^{\ominus}$ | $1 \times 10^{-4}$ | 320 |
| 5 | 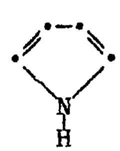 + 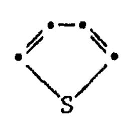 1 : 1 | $(C_4H_9)_4N^{\oplus}$ $BF_4^{\ominus}$ | $1 \times 10^{-5}$ | 320 |

<u>Tabelle Ia:</u> (Fortsetzung)

| Beisp. Nr. | Monomer(gemisch) zur Herstellung des Polypyrrolfilms | Leitsalz | el. Leitfähigkeit des Compositfilms (S/cm) | $T_g$ des Compositfilms (°C) |
|---|---|---|---|---|
| 6 | 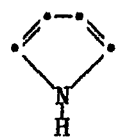 | $(C_4H_9)_4N^{\oplus}$ $CH_3-C_6H_4-SO_3^{\ominus}$ | $2 \times 10^{-6}$ | 320 |

Tabelle Ib:

| Beisp. Nr. | Elektroden-material | Strom-dichte ($mA/cm^2$) | Dicke des PI-Filmes (μm) | Elektrolysedauer (min) |
|---|---|---|---|---|
| 1 | Pt | 1,7 | 5 | 5 |
| 2 | Pt | 1,2-1,4 | 2,5 | 10 |
| 3 | Pt | 1,2-2,2 | 2,5 | 10 |
| 4 | Inox[1)] | 0,9 | 5 | 10 |
| 5 | Pt | 1,4-1,8 | 5 | 10 |
| 6 | Inox[1)] | 0,3-0,7 | 5 | 30 |

1) rostfreier Stahl

Beispiele 7-9: Es wird verfahren wie in Beispiel 1. Nur werden jetzt andere Polyimidfilme zur Beschichtung der Elektrode verwendet. Die Komponenten der Filme sowie einige ihrer Eigenschaften sind in Tabelle IIa zu finden, während die Herstellungsbedingungen in Tabelle IIb aufgelistet sind. Sämtliche Compositfilme sind ohne Bruch knick- und faltbar, während die entsprechenden Polypyrrolfilme zerbrechen.

Tabelle IIa:

| Bsp. Nr. | Polyimidkomponente | Pyrrol-monomeres | Leitsalz | el. Leitfähigkeit des Compositfilmes (S/cm) | $T_g$ des des Compositfilmes (°C) |
|---|---|---|---|---|---|
| 7 | 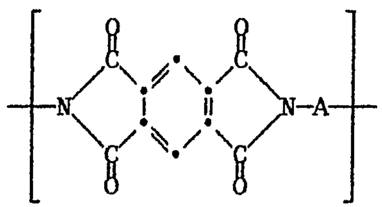 A = 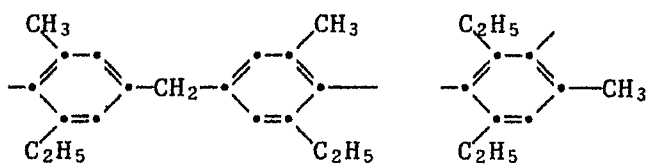 60 % 40 % | 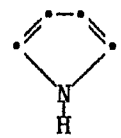 | $(C_4H_9)_4N^{\oplus}$ $BF_4^{\ominus}$ | $3 \times 10^{-1}$ | 280 |

Tabelle IIa: (Fortsetzung)

| Bsp. Nr. | Polyimidkomponente | Pyrrol-monomeres | Leitsalz | el. Leitfähigkeit des Compositfilmes (S/ m) | $T_g$ des des Compositfilmes (°C) |
|---|---|---|---|---|---|
| 8 | 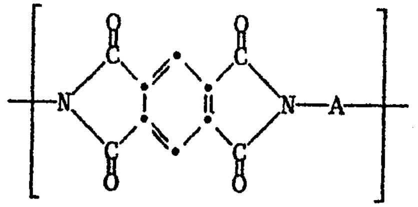 A = 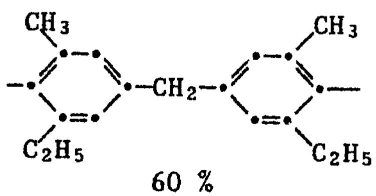 60 % 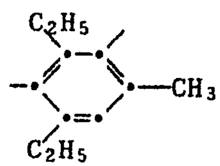 40 % | 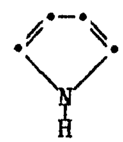 | $(C_4H_9)_4N^{\oplus}$ $CH_3-C_6H_4-SO_3^{\ominus}$ | $7 \times 10^{-4}$ | 280 |

Tabelle IIa: (Fortsetzung)

| Bsp. Nr. | Polyimidkomponente | Pyrrol-monomeres | Leitsalz | el. Leitfähigkeit des Compositfilmes (S/ m) | $T_g$ des des Compositfilmes (°C) |
|---|---|---|---|---|---|
| 9 | 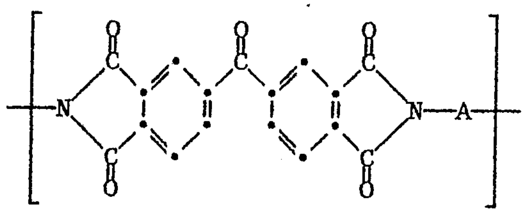 A = 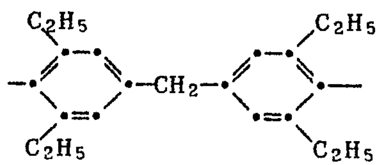 80 % 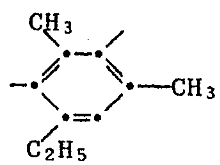 20 % | 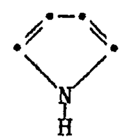 | $(C_4H_9)_4N^{\oplus}$ $BF_4^{\ominus}$ | $1 \times 10^{-1}$ | 300 |

Tabelle IIb:

| Beisp. Nr. | Elektroden-material | Strom-dichte ($mA/cm^2$) | Dicke des PI-Filmes ($\mu m$) | Elektrolysedauer (min) |
|---|---|---|---|---|
| 7 | Pt | 2,0-2,1 | 5 | 10 |
| 8 | Pt | 0,5-1,7 | 5 | 10 |
| 9 | Pt | 1,8-2,2 | 5 | 10 |

Patentansprüche

1. Zusammensetzung enthaltend Polypyrrol und in organischen Lösungsmitteln lösliches Polyimid.

2. Zusammensetzung gemäss Anspruch 1, worin das Polypyrrol Homo- oder Copolymerisate von Pyrrol und/oder substituiertem Pyrrol oder Copolymerisate von Pyrrol und/oder substituiertem Pyrrol mit fünf-oder sechsgliedrigen heteroaromatischen Verbindungen darstellt.

3. Zusammensetzung gemäss Anspruch 1, worin das Polypyrrol sich ableitet von Pyrrolen der Formel X

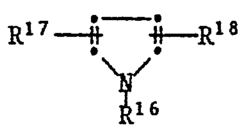

(X),

worin $R^{16}$ Wasserstoff, Alkyl, Cycloalkyl, Aryl, Aralkyl oder Alkaryl bedeutet, wobei besagte organische Reste gegebenenfalls durch $-COR^{20}$, $-COOR^{20}$, $-SO_2R^{20}$, $-SO_3R^{20}$, $-PO_3R^{20}R^{21}$, $-PO_2R^{20}$, $-NR^{20}R^{21}$, $-OR^{20}$, $-SR^{20}$, -CN oder $-SiR^{22}R^{23}R^{24}$ substituiert sind, oder worin $R^{16}$ auch -CN, $-SO_2R^{20}$,- $SO_3R^{20}$, $-COR^{20}$, $-PO_2R^{20}$ oder $-SiR_3^{22}$ bedeutet, $R^{20}$ und $R^{21}$ unabhängig voneinander Wasserstoff, Alkyl, Aryl oder Aralkyl sind, $R^{22}$,$R^{23}$ und $R^{24}$ unabhängig voneinander Alkyl oder Phenyl bedeuten, $R^{17}$ und $R^{18}$ unabhängig voneinander Wasserstoff, Alkyl, Cycloalkyl, Aryl, Aralkyl, Alkaryl, $-COR^{19}$, -CN oder Halogen bedeuten und $R^{19}$ Wasserstoff, Alkyl oder Aryl ist.

4. Zusammensetzung gemäss Anspruch 3, worin $R^{16}$, $R^{17}$ und $R^{18}$ Wasserstoff bedeuten.

5. Leitfähige Zusammensetzung gemäss Anspruch 1 enthaltend Polypyrrol in der oxidierten Form und als Gegenanion ein Anion ausgewählt aus der Gruppe bestehend aus $BF_4^-$, $PF_6^-$, $AsF_6^-$, $SbF_6^-$, $SbCl_6^-$,

 0191726

$ClO_4^-$, $IO_4^-$, $HSO_4^-$, $SO_4^{2-}$, $CF_3SO_3^-$, $CH_3C_6H_4SO_3^-$, $CF_3COO^-$, $HC_2O_4^-$ oder $[Fe(CN)_6]^{3-}$, Alkylsulfat, Alkylsulfonat, Alkylphosphat oder Alkylphosphonat, sowie Kombinationen dieser Anionen.

6. Zusammensetzung gemäss Anspruch 1 enthaltend ein Polyimid, das in organischen Lösungsmitteln löslich ist und das wiederkehrende Struktureinheiten der Formeln I, II oder III enthält

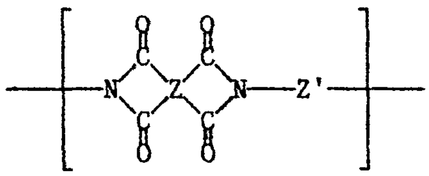 (I),

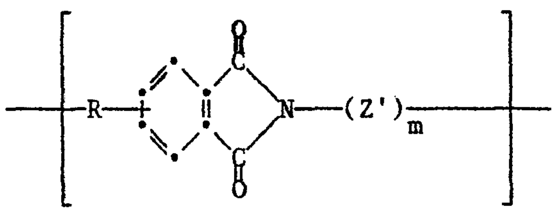 (II),

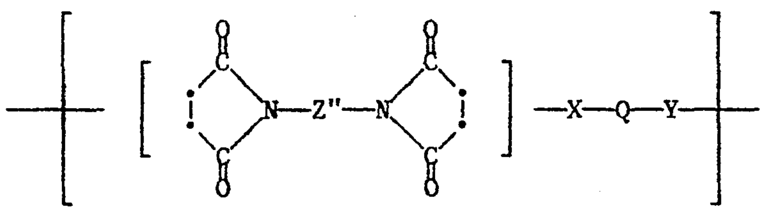 (III),

worin die vier Carbonylgruppen direkt an getrennte Kohlenstoffatome des Restes Z gebunden sind, wobei diese Carbonylgruppen sich paarweise in ortho- oder peri-Stellung zueinander befinden, so dass fünf- oder sechsgliedrige Imidringe entstehen, wobei Z ein vierwertiger organischer Rest, der mindestens einen aromatischen Ring enthält, ist und worin Z' ein zweiwertiger aliphatischer, cycloaliphatischer, aromatischer, araliphatischer oder heterozyklischer Rest ist, oder wobei Z und/oder Z' Kombinationen dieser Reste innerhalb der gegebenen Definitionen darstellen, worin R eine direkte C-C Bindung ist oder einen der folgenden Reste bedeutet

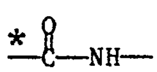 , 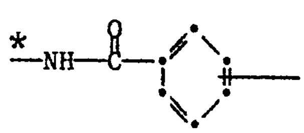 oder 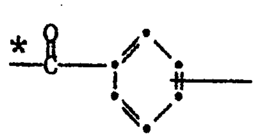 ,

worin die Markierung * jeweils die Verknüpfungsstelle mit dem aromatischen Rest bedeutet, m 1 ist, wenn R -CO-NH- darstellt, und im Fall der anderen Reste R 0 bedeutet, Z" und Q unabhängig voneinander eine der für Z' definierten Bedeutungen besitzen und X und Y unabhängig voneinander -O- oder -NH- sind.

7. Zusammensetzung gemäss Anspruch 6, enthaltend als lösliches Polyimid eine Verbindung mit der wiederkehrenden Struktureinheit der Formel I,
worin Z einer der Reste oder eine Kombination der Reste

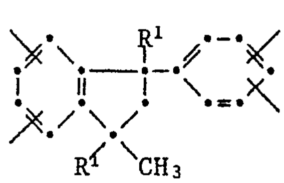 , 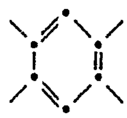 , 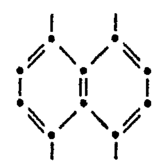 , 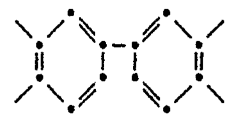 ,

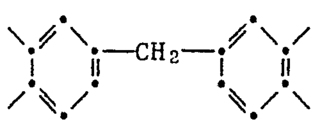 , 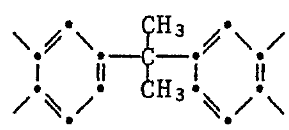 ,

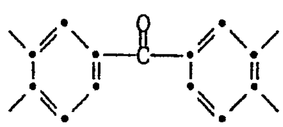 oder 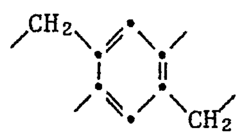

ist, worin $R^1$ Wasserstoff oder $C_1$-$C_5$-Alkyl ist, und worin Z' einer der Reste oder eine Kombination der Reste

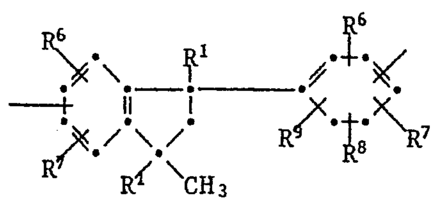 , 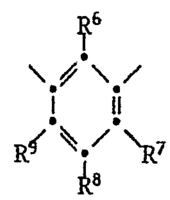 , 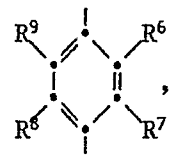 ,

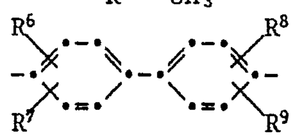 , 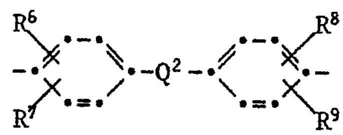 ,

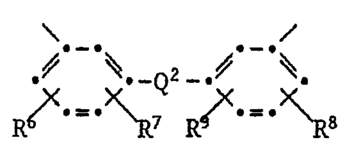 oder 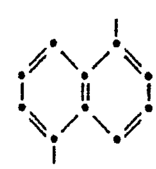

ist, worin $R^6$ bis $R^9$ unabhängig voneinander Wasserstoff, Halogen oder $C_1$-$C_5$-Alkyl sind und $Q^2$ $-CH_2-$, $-CO-$, $-O-$, $-S-$, $-SO-$, $-SO_2-$ oder $-C(CH_3)_2-$ bedeutet.

8. Zusammensetzung gemäss Anspruch 7, enthaltend ein lösliches Polyimid der Formel I, worin

1) aus der Gesamtzahl der wiederkehrenden Polyimideinheiten

A) in 0 bis 100 % solcher Einheiten Z ein Phenylindanrest der Strukturformel

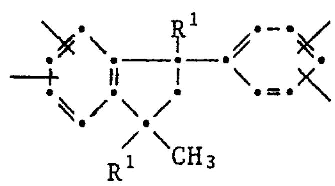

vorkommt, und worin

B) in 0 bis 100 % solcher Einheiten Z' ein Phenylindanrest der Strukturformel

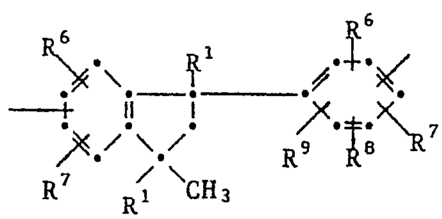

(IX),

vorkommt, worin $R^1$ Wasserstoff oder $C_1$-$C_5$-Alkyl ist, und worin $R^6$ bis $R^9$ unabhängig voneinander Wasserstoff, Halogen oder $C_1$-$C_5$-Alkyl bedeuten; wobei

2) aus der Gesamtzahl der Reste Z und Z' mindestens 10 % Phenylidanreste sind.

9. Zusammensetzung gemäss Anspruch 8, worin Z

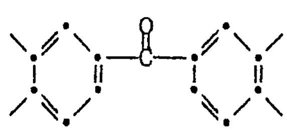

oder

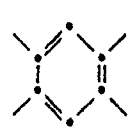

ist, und worin Z'

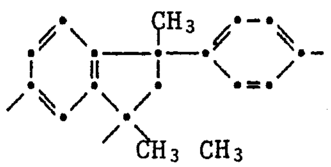

und/oder

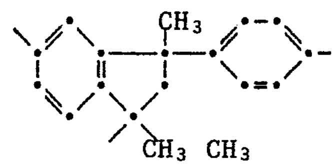

bedeutet.

10. Zusammensetzung gemäss Anspruch 7, worin Z einer der Reste oder eine Kombination der Reste

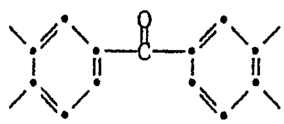

oder

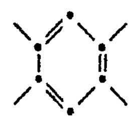

ist, und worin Z' einer der Reste oder eine Kombination der Reste

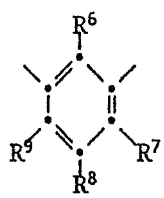

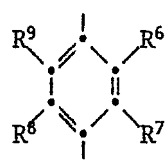

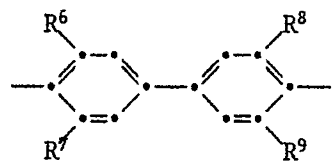

oder

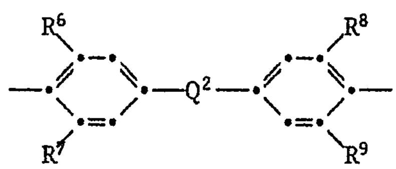

bedeutet, und worin mindestens einer der Reste $R^6$ bis $R^9$ $C_1$-$C_5$-Alkyl ist.

11. Zusammensetzung gemäss Anspruch 6, enthaltend ein Polyimid der Formel I, worin die Gruppe Z eine der Bedeutungen

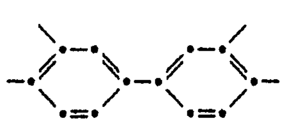

,

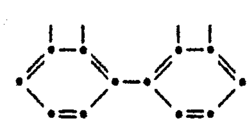

,

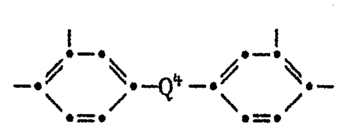

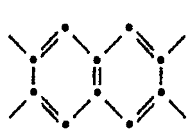

oder

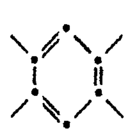

besitzt und worin die Gruppe Z'

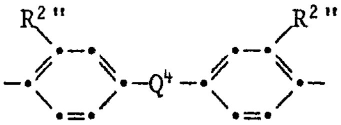 , 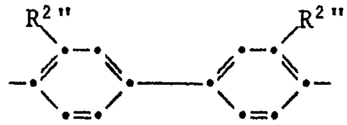

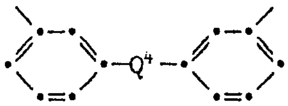 , 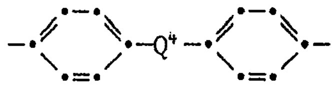 , 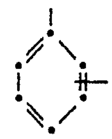 ,

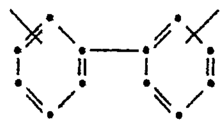 oder 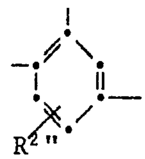

bedeutet, worin $Q_4$ -O-, -S-, $-SO_2$, $-CH_2-$, -CO- oder $-C(CH_3)_2-$ ist, $R^{2''}$ $C_1$-$C_5$-Alkoxy, Halogen, -COOH, -OH oder $-SO_3H$ ist, und worin mindestens 30 % der Gruppen Z einen Rest der Formel

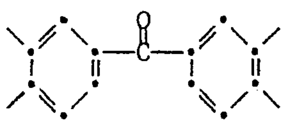

darstellen, und mindestens 30 % der Gruppen Z' Reste der Formel

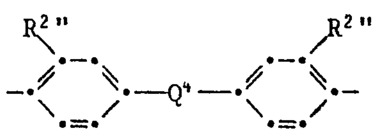 und/oder 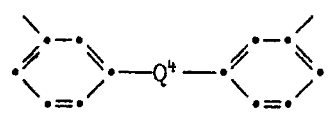

und/oder 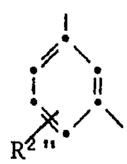

sind, wobei besagte Polyimide zu mehr als 10 Gew.% in Phenol löslich sind und wobei 0,5 g/100 ml von besagtem Polyimid in m-Kresol eine inhärente Viskosität von mehr als 0,05 (bei 30°C) besitzen.

12. Zusammensetzung gemäss Anspruch 6, enthaltend ein Polyimid der Formel I, worin Z

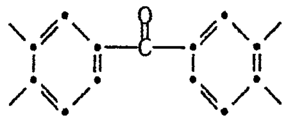

ist, und worin 10 bis 90 % der Reste Z' 4,4'-Diphenylmethan bedeuten, und worin der übrige Anteil der Reste Z'

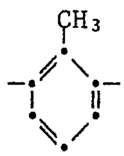

und/oder

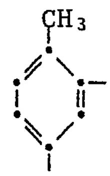

ist.

13. Verfahren zur Herstellung von Polypyrrol-Polyimidfilmen gemäss Anspruch 1 durch anodische Oxidation eines gelösten Pyrrols und gegebenenfalls eines geeigneten Comonomeren an einer Elektrode, die in Kontakt zu einem Polymerfilm steht, dadurch gekennzeichnet, dass man als Material für den Polymerfilm ein Polyimid verwendet, das in organischen Lösungsmitteln löslich ist.

14. Verwendung von Polypyrrol-Polyimidzusammensetzungen gemäss Anspruch 1 als leitfähige Verbundwerkstoffe bei der Herstellung von elektrischen Leitern, Elektroden, Batterien, Schaltern oder Halbleiterbauteilen, sowie bei der antistatischen Ausrüstung oder elektromagnetischen Abschirmung von elektronischen Bauteilen.

FO 7.3/ACK/cw*/we*